# EUROPEAN PATENT SPECIFICATION

(11) **EP 1 318 387 B1**
(45) Date of publication and mention of the grant of the patent: **11.05.2005**
(21) Application number: 03004231.1
(22) Date of filing: 24.06.1997
(51) Int. Cl.: G01F 11/02, B05B 11/00, B29C 45/14

(54) **Supplying and dosing cylinder unit and liquid dispenser**
Zufuhr- und Dosierzylindervorrichtung und Flüssigkeitsspender
Dispositif de dosage et de distribution comprenant un cylindre et distributeur de liquides

(30) Priority: 24.06.1996 DE 19625243; 06.06.1997 DE 19723947; 09.06.1997 DE 29710012 U; 15.04.1997 DE 19715709
(43) Date of publication of application: 11.06.2003
(62) Divisional of application: 97930396.3
(73) Proprietor: Poulten & Graf GmbH, 97877 Wertheim/Main (DE)
(72) Inventor: Fessel, Theodor, 91522 Ansbach (DE); Graf, Siegfried, 97877 Wertheim (DE); Graf, Hans, 97892 Kreuzwertheim (DE)
(74) Representative: Grünecker, Kinkeldey, Stockmair & Schwanhäusser Anwaltssozietät

(56) References cited:
- EP-A- 0 542 241
- EP-A- 0 718 044
- DE-A- 3 001 686
- DE-A- 3 534 550
- DE-A- 4 334 974
- DE-U- 9 418 511
- FR-A- 2 581 370
- US-A- 3 038 676
- US-A- 4 225 063
- US-A- 4 815 663
- US-A- 4 919 299
- US-A- 4 944 431
- US-A- 5 141 137

## Description

The present invention refers to a supplying and dosing cylinder unit for precisely supplying and dosing an adjustable amount of liquid, in particular for a liquid dispenser, comprising: supplying and dosing cylinder with a supplying plunger being slidably accommodated therein, limiting a supplying and dosing chamber which can be varied according to its volume, and a valve block, said valve block comprising a valve means for releasing or blocking a fluid supply path or a fluid discharge path. Further the invention refers to a liquid dispenser comprising a supplying and dosing cylinder unit according to claim 1.

A supplying and dosing cylinder unit for a liquid dispenser for dosing liquids is known from US 5,141,137. A reservoir is provided with an adjustment device through which the supply quantity to be output is progressively adjustable precisely. The stroke length of a supplying plunger slidably received in a supplying and dosing cylinder is adjusted by this adjustment means. The supplying and dosing cylinder is made of a glass material resistant to the medium to be supplied. The supplying and dosing cylinder is provided with a measuring scale in the area of its outer surface.

The supplying and dosing cylinder is inserted into a valve block having an intake and an outlet valve into which an outlet or discharge tubule is screwed-in.

A similar means is known from DE 41 37 351 which corresponds to EP 0 542 241.

It is an objective of the present invention to improve a supplying and dosing cylinder unit of the kind as indicated above in that it has a high and reliable dosing accuracy and which is more simple to manufacture.

This objective is solved for a supplying and dosing cylinder unit of the above kind in that the valve block is formed as an integral plastic member with a plastic body forming an inner wall and an outer wall of the supplying and dosing cylinder formed during a plastic shaping process of a high-quality plastic material resistant to chemicals.

Further preferred embodiments are laid down in the dependent claims.

It is a further objective of the present invention to improve a liquid dispenser in a manner that it enables a precise supply and dosing of the liquid to be dispensed and has an uncomplicated and inexpensive design.

This objective is solved by a liquid dispenser having the features of claim 19.

In the following, the present invention is explained in greater detail with respect to embodiments thereof in conjunction with the accompanying drawings, wherein:
- Figs. 1a and 1b: are the longitudinal section views of liquid dispensers which do not form part of the present invention;
- Fig. 2: is a simplified section through a form tool for forming the integral unit which is not part of the present invention consisting of the valve block and the supplying and dosing cylinder;
- Fig. 3: is a longitudinal section through an integral unit consisting of a valve block and supplying and dosing cylinder which is not part of the present invention;
- Fig. 4: is a view of an alternative embodiment which is not part of the present invention of a liquid dispenser in the longitudinal section;
- Fig. 5: is a view of a single part of a preferred embodiment of an outlet means provided in the liquid dispenser according to Fig. 4;
- Fig. 6: is a functional sketch for describing switching functions of the outlet means according to Fig. 5;
- Fig. 7: is a further embodiment of a supplying and dosing cylinder with a valve block integrally formed therewith;
- Fig. 8: is the inventive embodiment of a valve block made in skeleton structure with an integrally formed supplying and dosing cylinder as well as an ejector conduit;
- Fig. 9: is a further embodiment of a supplying and dosing device having a valve block formed in skeleton structure, and a preferred embodiment of the ejector tubule;
- Fig. 10: is a discharge tubule in lateral view;
- Fig. 11: is a discharge tubule in lateral view (from the right according to Fig. 1), wherein the bent end is cut off;
- Fig. 12: is an enlarged longitudinal section according to section A-B in Fig. 2 including the bent end section that is not shown there;
- Fig. 13: is an enlarged axial view of the end section of the discharge tubule conduit according to Fig. 3 (view according to Fig. 1 from the left);
- Fig. 14: shows a valve block having a receiver conduit, adapter sleeve and an integral protective tube of the supply unit of a liquid dispenser, wherein a glass or ceramic cylinder as a supplying and dosing cylinder of the supply unit of the liquid dispenser preferably encompasses the protective tube; this embodiment does not form part of the invention;
- Fig. 15: shows a liquid dispenser with the receiver conduit according to Fig. 10 in a lateral view (schematically), wherein this embodiment corresponds to the embodiment according to Fig. 9 (in this case without a closing cap); and
- Fig. 16: is a sectional view in the area of the receiving opening of the valve block, not forming part of the invention.

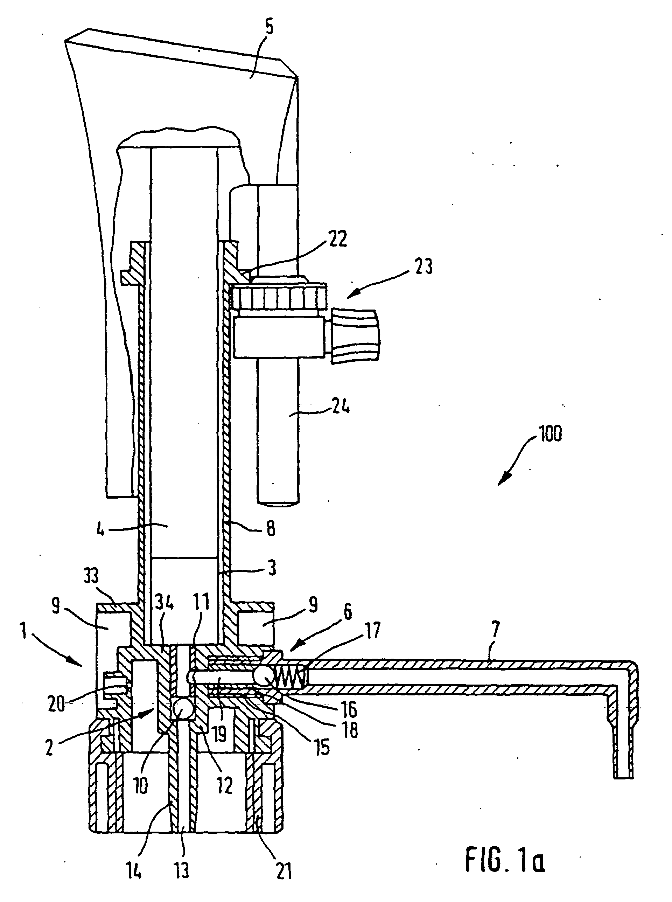

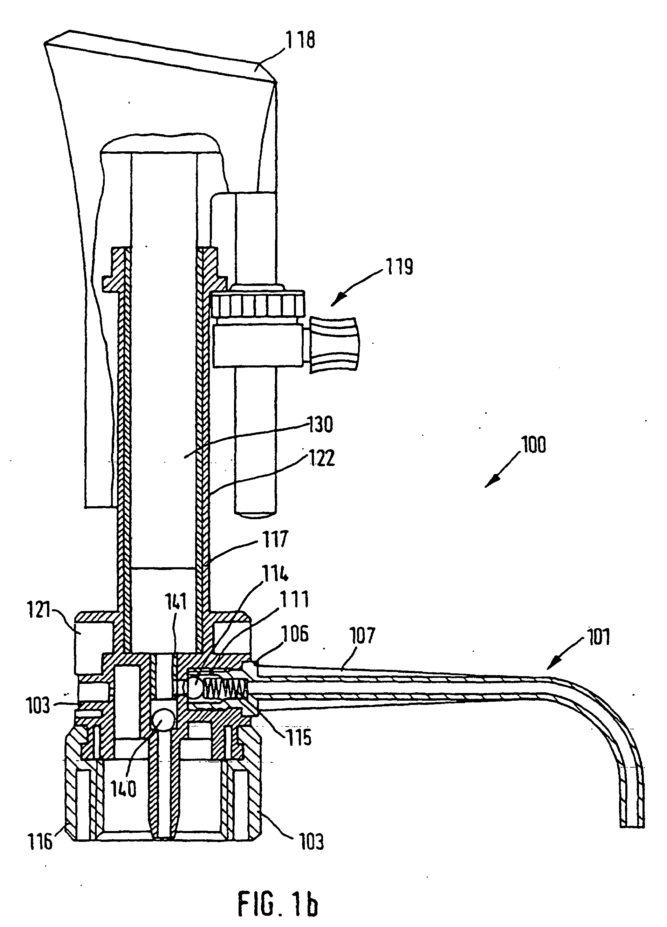

The liquid dispenser 100 shown in Fig. 1, which is not part of the present invention, comprises a valve block 1 that can be set onto a vessel or installed into a laboratory pump means, with a valve means 2 provided in the interior of the valve block. An inner space formed in the supplying and dosing cylinder 3 communicates through this valve means 2 with the vessel or container (for example a canister), which is not shown. A supplying and dosing plunger 4 is accommodated in the supplying and dosing cylinder 3, said supplying and dosing plunger being slidably reciprocal by means of a handle 5. A liquid sucked in from the vessel or container and conveyed through the supplying and dosing cylinder 3 and the supplying plunger 4, e.g. a diluted solution, is supplied via the outlet means to a discharge tubule 7. The valve block 1 and the supplying and dosing cylinder 3 form an integral unit.

The valve block 1 of the embodiment that is shown consists of a plastic material, in particular of polypropylene. The supplying and dosing cylinder 3 of this embodiment does not form part of the invention. It is encompassed by a protective tube 8 integrally formed with the valve block 1. In the embodiment shown, which is not part of the present invention, the supplying and dosing cylinder 3 is formed as a glass cylinder and is injected into the valve block 1 and the protective tube 8 in the course of a plastic injection molding process. The glass cylinder 3 has a thickness (wall thickness) of for example 1 mm, whereas the surrounding protective tube 8 has a wall thickness of for example 2.5 mm. The wall thickness of the glass cylinder 4 is preferably at least 10% of the wall thickness of the protective tube 8 which is made of plastics. The protective tube 8 is made of a transparent or translucent plastic material, so that the filling level of the supplying and dosing chamber formed in the supplying and dosing cylinder 3 can be checked visually.

The supplying and dosing cylinder 3 is fixedly held in the protective tube 8 and the valve block 1. The supplying and dosing cylinder 3 is in an advantageous manner adherently connected to the protective tube.

The supplying plunger 4 is preferably a glass plunger or a glass plunger at least partially encompassed by PTFE, wherein this PTFE coating comprises at least a sealing lip.

The valve block 1 has a skeleton structure and comprises a number of webs 9, which define exposed recesses towards the outer side of the valve block 1.

The webs 9 that are shown are arranged in a manner that the outer portion of the valve block does not form undercut portions in a two-piece form tool.

The valve means accommodated in the valve block 1 comprises a suction closing valve which comprises a suction valve ball 10 that can be loaded with a spring (not shown), and that comprises a spacer sleeve 11 defining the stroke movement of this valve ball 10. A valve seat 12 of the valve means 2 is established by a circumferential edge formed at the valve block 1. This circumferential edge is formed in the opening portion of an intake duct 13, which in an advantageous manner extends coaxially to the longitudinal axis of the supplying cylinder 3. The intake duct 13 extends in the interior of a hose pin 14, which in an advantageous manner is also integrally formed with the valve block 1.

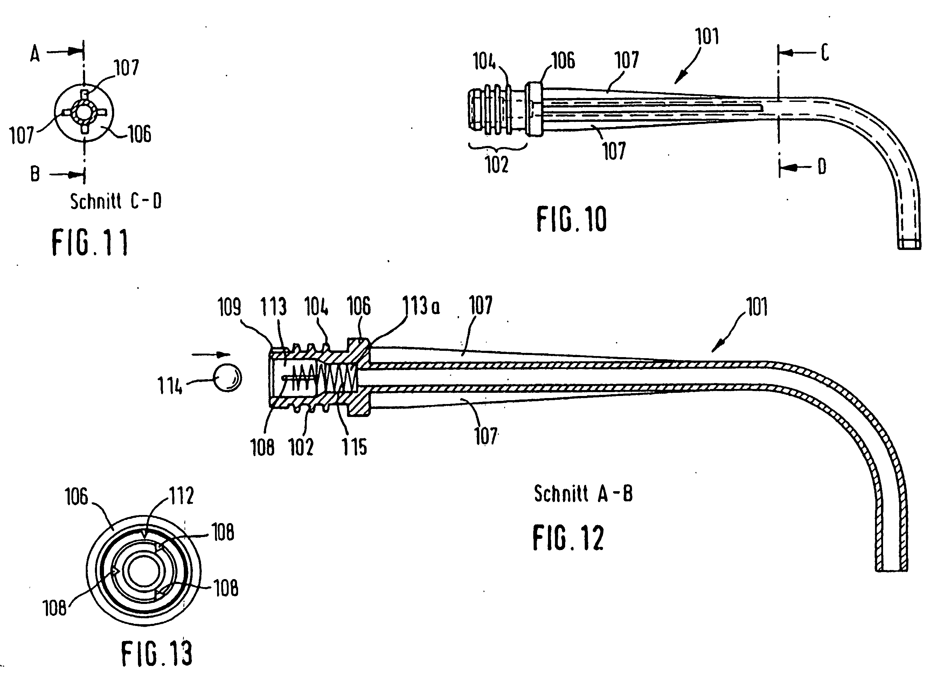

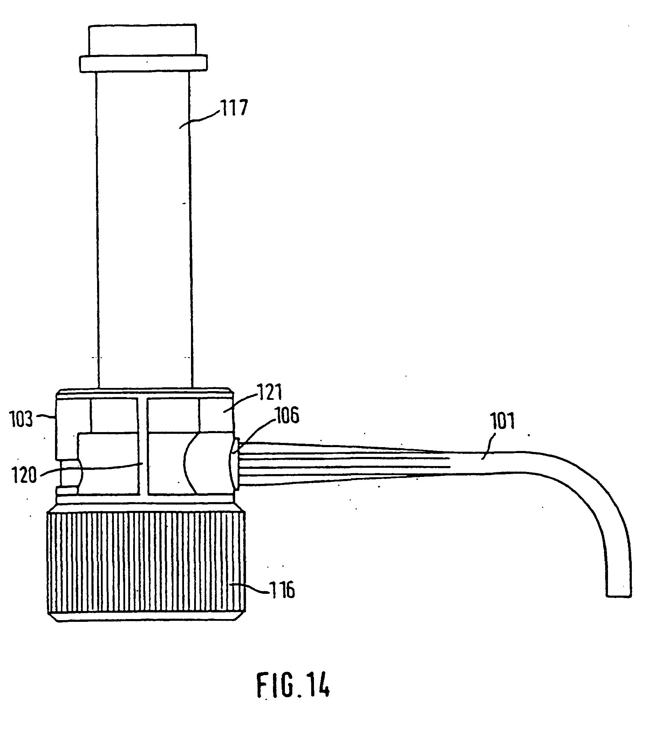

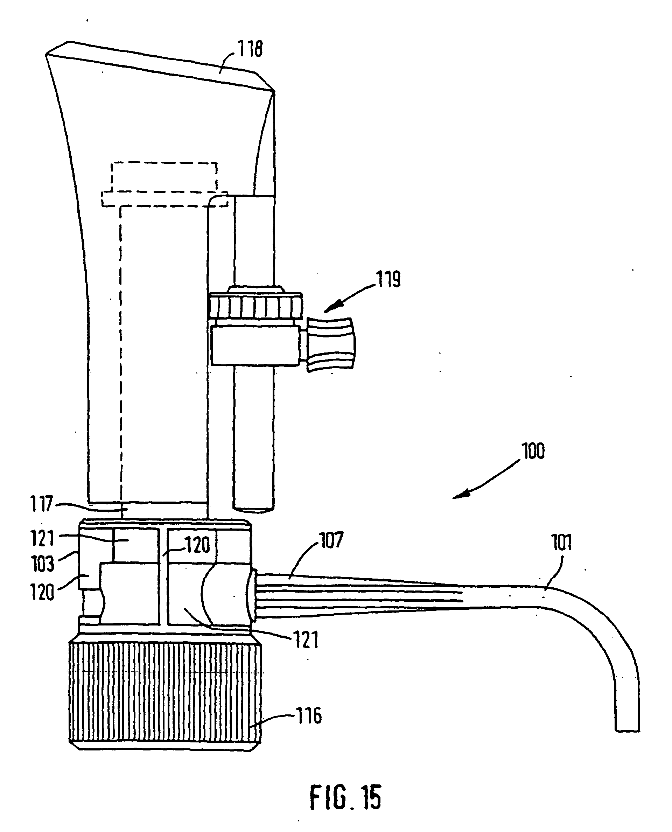

The foot section of the discharge tubule 7 is provided with a screw base 15 or with a coaxial sealing blade base (compare Fig. 10) and screwed by this base into the valve block 1 radially from the outside (Fig. 1) or it is captively pressed into this base (compare Fig. 10 to 16). The outlet means 6 preferably comprises a ball valve with an outlet valve ball 16 loaded by a spring 17. The outlet valve ball 16 is seated in closing position on a sleeve 18, made in this case of plastics, which is inserted into the valve block 1.

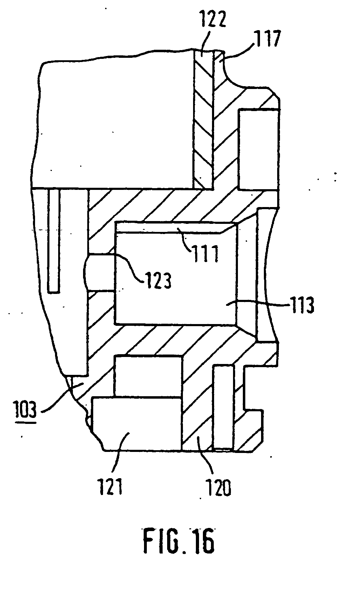

As an alternative, the valve seat can be attached without a sleeve directly at the valve block 1 or it can be formed by same (compare Fig. 1b, 10 to 16). The sleeve 18, the outlet valve 16 and the spring 17, in case of the thread or press seat design, are accommodated coaxially to the longitudinal axis of the discharge tubule 7 in the inner portion of the thread or press base 15. A passage channel formed in the interior of the sleeve 18 is in fluid communication with the supply space formed in the supplying and dosing cylinder 3. The sleeve 18 is also unnecessary. Such an embodiment is shown in Fig.1b and 10 to 16. In this embodiment, an end portion 102 of the discharge tubule 107 forms an accommodating space 113 for the valve ball 114 which is pre-loaded by a pre-loading spring 115 against a circumferential edge in the valve block 103 as a valve seat 123 or in a separately pressed-in valve seat in the valve block (also compare Fig. 1b and 16).

A hose at a vessel is put onto the hose pin 14 before assembly of the liquid dispenser, said hose reaching down to the bottom of the vessel. In case of an upward movement of the supplying and dosing plunger 4, a fluid in the vessel is sucked in by the valve means 2 through this hose. Due to the pressure build-up in the interior of the supplying and dosing cylinder 3, the outlet valve 16 is forced out of its closing position opposite to the spring force of the spring 17 to an open position and enables a discharge of the fluid from the supplying and dosing space formed in the supplying and dosing cylinder 3 through the discharge tubule 7.

To permit a pressure compensation between the interior of the vessel and the surroundings when sucking in a fluid through the supplying plunger 4, the valve block 1 is provided with a ventilation bore 20, which is covered in an advantageous manner by a filter stopper consisting for example of a sintered granulate material. This filter stopper can be inserted into a preferably tapered insertion bore also provided at the valve block 1. The valve block 1 is sealingly attached at the vessel by means of an adapter (swivel nut). Instead of using a swivel nut 21 provided separately from the valve block, it is also possible to provide an appropriate threaded section which is formed integrally with the valve block 1.

A head section 22 integrally formed with the protective tube 8 is formed in the upper portion of the protective tube 8, said head section forming an abutment surface for a supplying stroke adjustment means 23. The head section 22 extends up to the uppermost axial end of the supplying and dosing cylinder 3 and, if necessary, it projects over the front end section of the supplying and dosing cylinder in a manner that the circumferential edges of this end portion are still covered by the plastic material of the protective tube 8.

The handle 5 provided in the liquid dispenser shown in the present invention is provided as a hollow body, and in lowered position of the supplying plunger the handle substantially fully covers the supplying and dosing cylinder 3 or the protective tube 8 encompassing same. According to a preferred embodiment, a scale rod 24 of the supplying stroke adjustment means 23 is formed integrally with the handle 5.

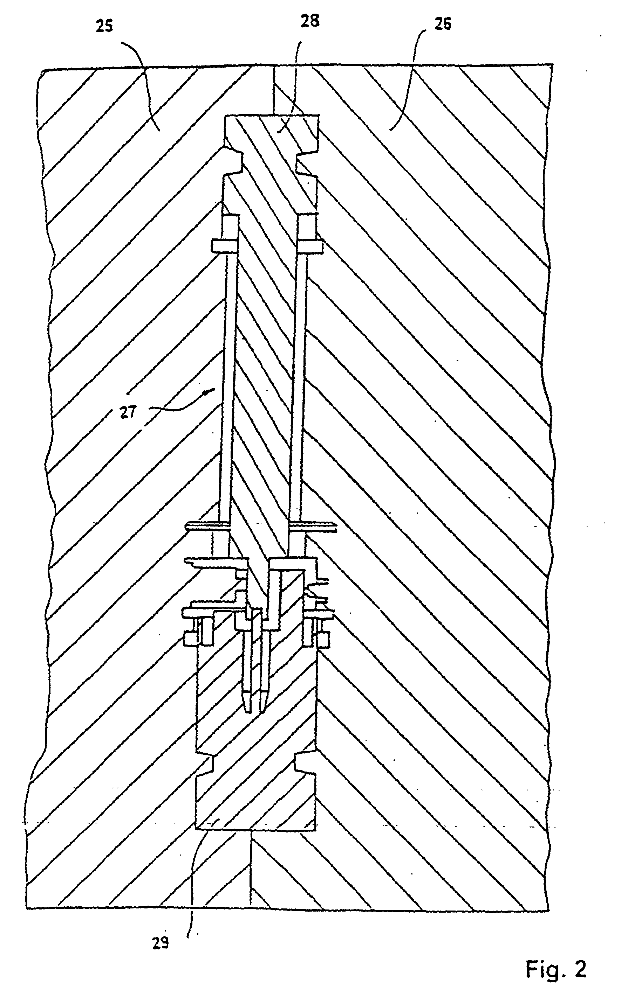

The integral unit described before in connection with Fig. 1, which is formed by the valve block 1 and the supplying and dosing cylinder 3, is formed in accordance with a special embodiment by a form tool, the structural part of which provided for forming the outer portion of the valve block 1, being movable in a direction extending substantially transversely to the longitudinal direction of the supplying and dosing cylinder 3 in an opening or closing position. In the embodiment of a form tool shown in Fig. 2, this form tool comprises a first structural part 25 and a second structural part 26. Both structural parts 25 and 26 are movable in a direction transversely to the longitudinal direction of the unit formed by these structural parts. A first core element and a second core element 29 are disposed in a mold cavity defined between the two structural parts 25, 26. The first core element 28 defines together with the first structural part 25 and the second structural part 26 a sleeve section in which the plastic body provided for receiving the supplying cylinder is formed. Before closing the first and the second structural parts 25, 26, the insert cylinder, shown in Fig. 1 (not part of the invention), can be put onto this first core element 28. After inserting the second core element 29, the first and the second structural part 25, 26 are put together and a plastic material, which is preferably polypropylene, is injected into the sleeve 27 that is now formed. This plastic material fills out the entire sleeve 27 and thus forms an integral part of the liquid dispenser, which comprises the valve block 1 (Fig. 1) and the plastic body provided for receiving the supplying cylinder 3 and preferably also the discharge tubule 7. It is possible to manufacture different units in a simple manner, in particular regarding the stroke volume by replacing the first and the second core elements 28 and 29, in particular the first core element 28. Differing inner diameters of the supplying and dosing cylinders 3 can be taken into account in particular by an appropriate first core element 28.

The two first and second core elements 28 and 29 are centered by the first and second structural parts 25, 26. According to a preferred embodiment, the two core elements are additionally inserted into one another, in particular in an area provided for filling the intake channel 13 shown in Fig. 1. As an alternative to the embodiment of the form tool shown in Fig. 2, it is also possible to couple at least the second core element 29 with a drive means to permit an automatic demoulding of the structural part formed in the mold cavity 27. The demoulding movement of the first core element 28 may in accordance with a preferred embodiment also be automated. An especially reliable equipment of the first core element 28 with the supplying and dosing cylinder 3 is achieved in that the form tool is disposed in the injection mold in a manner that the valve block is disposed above the head section. In accordance with another preferred embodiment, the longitudinal axis of the first core element 28 substantially extends vertically, wherein a section of the first core element 28 provided for forming the first valve means 2 (Fig. 1) points upwardly. It is ensured in a preferred manner, that the supplying and dosing cylinder 3 cannot slip off the first core element 28 due to its own weight. The injection of the plastic material into the mold cavity 27 is also carried out in accordance with a preferred embodiment in a manner that the supplying and dosing cylinder 3 possibly inserted, is not displaced in the first core element 28. To reduce the thermal load on the supplying and dosing cylinder 3 when injecting the plastic material, the first core element 28 is pre-heated according to a preferred embodiment. The pre-heating of the first core element 28 can be carried out, in accordance with a preferred embodiment, by an in particular electric heating means disposed in the interior of this core element 28.

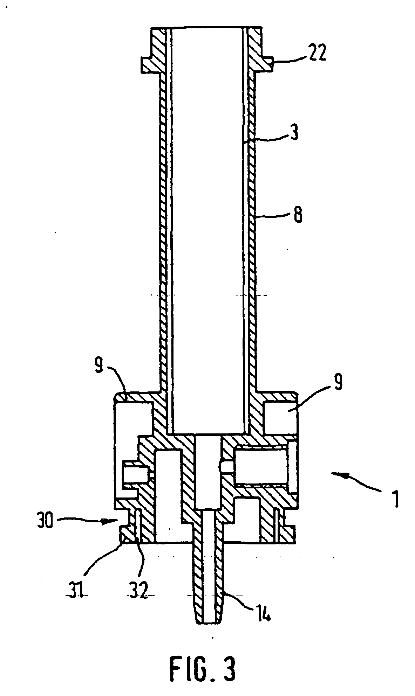

An integral unit for a liquid dispenser which is produced by a form tool according to Fig. 2 is for example shown in Fig. 3. This integral unit comprises the valve block 1 provided for accommodating the valve means 2, as well as a plastic body formed integrally with said valve block and defining the protective tube. The supplying and dosing cylinder 3, which does not form part of the invention, provided for receiving the supplying plunger 4 shown in Fig. 1 is embedded into this plastic body. The embedding of the supplying and dosing cylinder 3 into the plastic body is carried out in the course of a plastic injection molding process during which the valve body is formed together with the plastic body in an appropriate mold cavity. The head section 22 is formed at an end of the plastic body forming the protective tube, facing away from the valve body 1, said head section 22 forming an abutment surface which defines the stroke of the supplying plunger 4 in combination with a stroke limiting means. The valve block 1 integrally formed with the plastic body for receiving the supplying cylinder is formed as a skeleton structure with outwardly projecting webs 9. These webs 9 permit in a manner that saves material a sufficient reinforcement of the valve body 1.

The integral member shown in Fig. 3 also has provided thereon the hose pin 14 which is formed integrally with the valve block and which has already been described in connection with Fig. 1. The surroundings of the hose pin 14 may, according to a preferred embodiment, be formed by the second core element 29 shown in Fig. 2. The integral member shown in Fig. 3 is preferably attached by means of a swivel nut (Fig. 1) at a vessel, a container or a drive means. This swivel nut or a different suitable fastening means engages according to a preferred embodiment a circumferential groove 30 provided in the lower portion of the valve block 1. This circumferential groove is defined by an annular flange 31, which is resilient in the radial direction due to an annular groove 32 also formed in the valve block 1.

In the embodiment of the integral member shown in Fig. 3, the supplying and dosing cylinder 3 is even with the head section 22. As an alternative, it is also possible to make the supplying and dosing cylinder 3 shorter or to make the head section 22 longer. Furthermore, it is also possible to form all operational sections provided for the valve means of the liquid dispenser, at an insertion element, which is inserted or screwed-in into a recess into the valve block extending in particular radial to the longitudinal axis of the supplying cylinder 3.

According to a further embodiment, the discharge tubule 7 is not screwed into the valve block 1 through a threaded base, but is pressed into the valve block 1 through a preferably cylindrical press seat (compare Fig. 10 to 16). Such an attachment of the discharge tubule 7 at the valve block 1 turns out to be of special advantage in particular in view of the capability of sterilization of the liquid dispenser, since a much smaller gap between the two components is established compared to a threaded connection. As an alternative to such a press-fit of the foot portion of the discharge tubule 7 into the valve block 1, it is also possible to provide a shoulder similar to the pin hose 14 at the valve block, on which the discharge tubule 7 may be attached. In order to ensure an especially reliable sterilization of the liquid dispenser, the discharge tubule may also be drawn off the liquid dispenser.

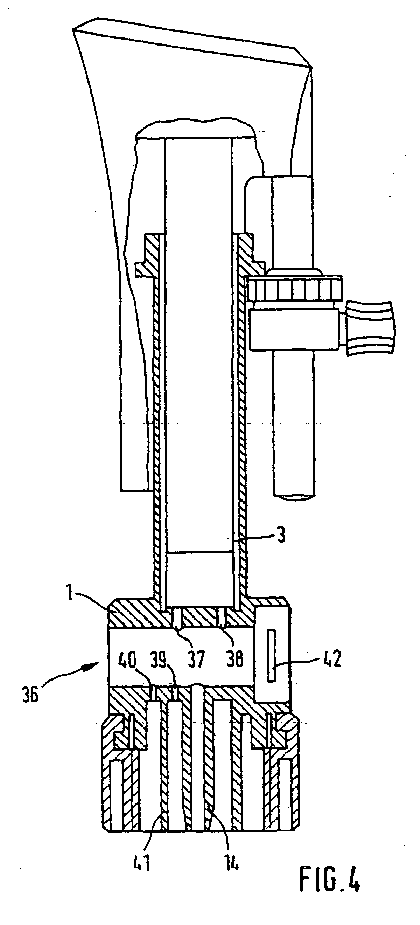

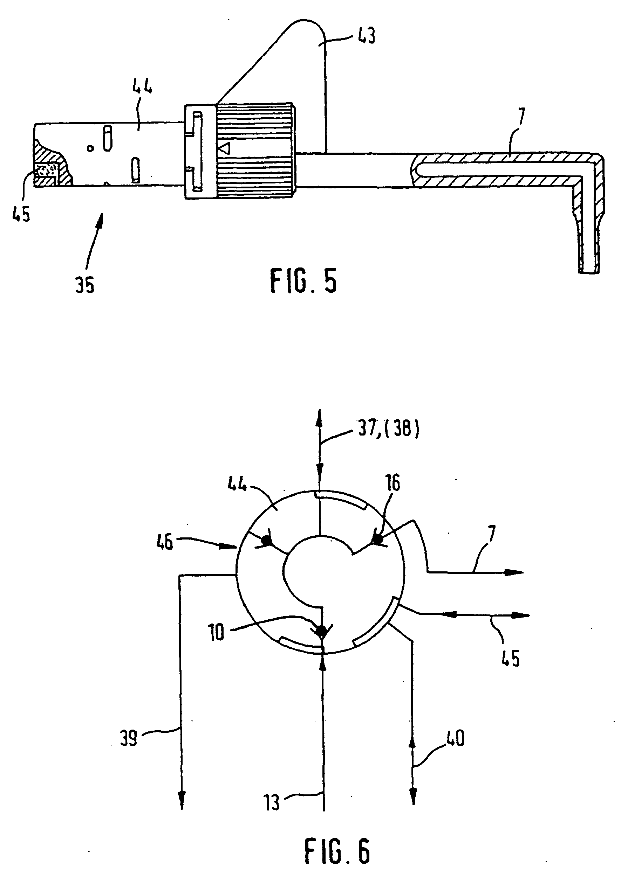

The embodiment of a liquid dispenser shown in Fig. 4 differs from the embodiment described before in combination with Fig. 1 by a switching mechanism accommodated in the valve block 1. This switching mechanism comprises a recess provided for accommodating a valve slide element 35 (Fig. 5). The recess is provided as a cylindrical through bore and extends continuously from a front side of the valve block 1 to a rear side of the valve block. A number of passage ducts run into the circumferential wall of the through bore.

In the embodiment shown in Fig. 4, these through bores are a cylinder intake duct 37, a cylinder outlet duct 38, the intake duct 13 already described in combination with Fig. 1, a flushing duct 39 and a ventilation duct 40. The cylinder intake duct 37 and the cylinder outlet duct 38 are provided as separate ducts in this embodiment. However, it is also possible, to combine these two ducts if the valve slide element 35 (Fig. 5) is designed appropriately, as has been done in the embodiment according to Fig. 1.

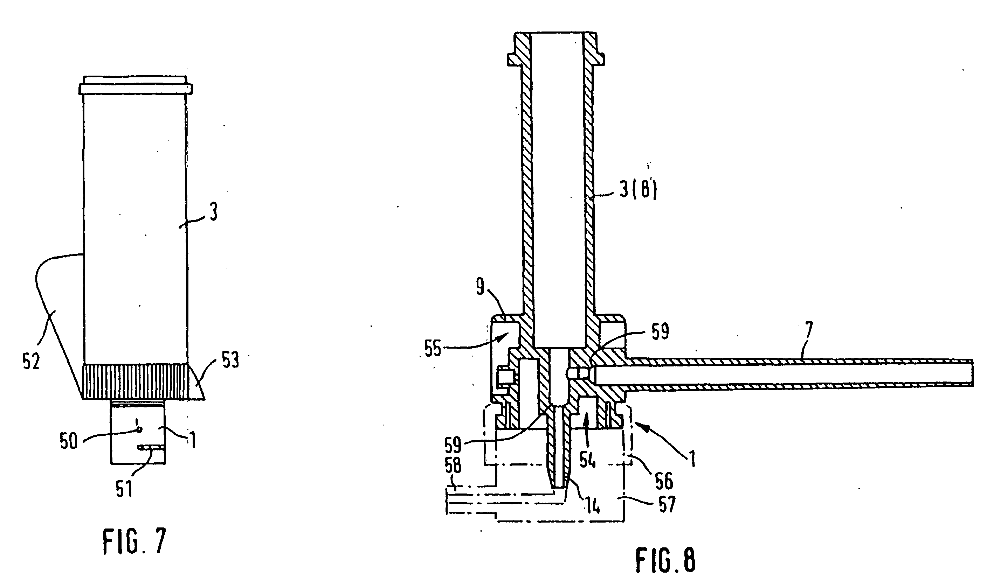

The ducts 37, 38, 39, 40 and 13 may, as will now be described in combination with Fig. 6, be brought to an opening or closing position by operating the valve slide element 35. The flushing duct 39 is provided, in particular when taking the liquid dispenser into operation for the first time, or in case of a longer standstill of the dispenser, to return the fluid supplied by the supplying and dosing cylinder back to the vessel, until air bubbles are no longer generated in the intake hose or in the supplying and dosing cylinder.

According to a preferred embodiment, the flushing duct 39 opens into an annular space surrounding the hose pin 14. It is then possible in an advantageous manner that the fluid returned by the flushing duct flows back into the vessel on the outer wall of the hose put onto the hose pin 14 without splashing onto the wall of the vessel. According to a preferred embodiment, a cylinder pin 41 extending coaxially to the hose pin 14 is provided to form this annular space according to Fig. 4. This cylinder pin 41 on one hand enables an especially regular bypass flow of the intake hose (not shown) and, on the other hand, it prevents the ventilation duct 40 from contacting the fluid returned. The inner wall of the recess 36 forms an especially smooth surface. The recess 36 can also be slightly conical, which leads to an extremely reliable sealing between the valve slide element 35 and the inner wall of the recess 36.

In the embodiment shown in Fig. 4, which is not part of the present invention, the valve slide element 35 is fixed in the valve body 1 by means of a bayonet socket. This bayonet socket comprises a lock-in projection formed at the valve body 1. To enable an especially effective cleaning of the dispenser and an especially effective sterilization of the liquid dispenser, it is provided according to a special embodiment, that preferably the entire valve and switching mechanism can be removed from the valve block 1 in a simple manner, preferably without the aid of a tool. For this purpose, the recess 36 provided for accommodating the valve slide element 35 is accessible from the outside. The relatively large recess 36 furthermore enables an especially effective access of a cleaning or sterilization agent to the inner space formed in the supplying and dosing cylinder.

If necessary, the valve body 1 is provided with a plug device, by means of which the valve slide element 35 removed from the recess 36 can be attached to the valve body 1 or the liquid dispenser in a preferably upright position. A switching lug 43 (Fig. 5), integrally formed with the valve slide element 35 preferably serves as an attachment section. This switching lug 43 may be inserted into a groove formed at the valve block 1, so that it becomes possible to also put the disassembled liquid dispenser as a combined unit into a sterilization device without the individual parts of the liquid dispenser lying loosely in the sterilizator or being mixed-up.

The valve mechanism provided in the valve block 1 described in combination with Fig. 4, may also be used in a liquid dispenser, in which the valve block 1 and the supplying and dosing cylinder 3 do not form an integral unit. It is also possible to insert an insertion element into the recess 36 provided in the valve block instead of the valve slide element 35, wherein said insertion element has, for example, just two check valves and does not allow any other switching operation between a flushing mode, a supplying mode and a blocking position. Such an insertion element is for example provided in a base version of the dispenser and can be perfectly exchanged with a valve slide element 35 that is designed accordingly. The valve block 1 and the supplying and dosing cylinder 3 then form a supplying module, the special operational properties of which being finally defined by the use of an appropriate valve slide element 35 or an appropriate insertion element. The described embodiment of the valve block can also be used without an insertion cylinder.

The valve slide element 35 shown in Fig. 5 is pivotally inserted into the recess 36 of the valve block. The maximum pivot range of the valve slide element 35 is defined by a stopper means. This stopper means is, according to a special embodiment, formed by a bayonet socket means, which at the same time fixes the valve slide element 35 in the axial direction. The valve slide element 35 comprises a pin section 44, the circumferential surface of which forming a slide system together with the inner circumferential wall of the recess 36. By pivoting the pin section 44 to certain rotary positions, certain ducts formed in the valve block 1 become effective, i.e. they let liquid through, or become effective, i.e. closed.

It is possible by the valve mechanism to also block the vessel ventilation. If extremely volatile supply media are used, it is thereby avoided that vapor formed in the interior of the vessel escapes from the vessel. The ventilation of the vessel is active only if the device is switched to a discharge or flushing state.

In order to prevent that an undesired high pressure is built up in the interior of the vessel, the ventilation means may additionally be provided with an overpressure valve means or a comparably small pressure compensation bore. According to a special embodiment, the vessel ventilation means comprises a sintered granulate pin 45, which is inserted into the valve slide element 35.

A number of communication paths are provided in the pin section 44 of the valve slide element 35, said paths being open in a respective switching position of the valve slide element 35.

An embodiment that is of special advantage, not only in view of assembly points of view but also in view of the capability of sterilization of the liquid dispenser is provided in that preferably all valves (check valves) are disposed in the valve slide element 35. Three check valves in particular formed by spring-loaded balls are provided in the embodiment shown in Fig. 5 in the interior of the pin section 44. The respective valve seats of these check valves are, in accordance with a special embodiment, integrally formed with the valve slide element 35. The discharge tubule 7 is, according to a preferred embodiment, also integrally formed with the valve slide element 35. The switching lug provided at the valve slide element 35 on the one hand enables an especially ergonomic switching of the valve slide element and on the other hand represents a display means, by means of which the respective operating condition of the fluid dispenser can be easily recognized.

The function of a preferred embodiment of the valve slide element 35 will now be described in combination with Fig. 6. The pin section characterized in Fig. 6 by reference numeral 44, is pivotal clockwise and counter-clockwise about 30°. In the position shown, the pin section 44 is in an "outlet" position and enables an intake of the fluid over the intake channel 13 shown in a simplified manner as an arrow, as well as over the cylinder intake duct 37. During the intake process, the intake valve ball 10 takes an open position and enables a fluid passage through the check valve, which is shown in a simple manner in this case. When lowering the supplying plunger, the fluid is discharged into the cylinder outlet duct, characterized by reference numeral 38, wherein the outlet valve ball 16 takes an open position and enables a fluid passage to the outlet duct 7. During the intake of the fluid from the vessel over the intake duct 13, ambient air may flow into the vessel through the sinter granulate pin 45, shown in Fig. 5 as well as through the ventilation duct 40. If excess pressure prevails in the interior of the vessel, a respective amount of gas may also escape from the vessel via passages 40, 45. If the pin section 44 of the sketch that is shown here is pivoted about 30° in counter-clockwise direction, the connection between the discharge tubule 7 and the cylinder outlet duct 38 is interrupted, and the flushing duct 39 communicates via an additionally provided flushing check valve 46 with the interior of the supplying cylinder. It is possible in this switching position to supply a fluid sucked on by the intake duct 13, through the supplying and dosing cylinder back to the vessel over the flushing duct 39 by respective pump strokes of the supplying plunger.

In the embodiment of the valve means shown in Fig. 6 there is a communication during flushing between the interior of the vessel and the surroundings through the sinter granulate pin 45.

If the pin section 44 is pivoted from the position shown in Fig. 6 about an angle of 30° in clock-wise direction, the pin section blocks the intake duct 37, the outlet duct 38, the discharge tubule 7, preferably also the ventilation duct 40, the intake duct 13 and if necessary also the flushing duct 39. In this manner an undesired escape of the fluid or of vapor formed by the fluid is prevented in an especially reliable manner. Moreover, it is ensured in an advantageous manner that in case the supplying and dosing cylinder breaks or is separated from the valve block 1, the vessel can still safely be locked. Regarding Fig. 6, it has to be noted that the fluid paths that are shown in this Figure are shown schematically only and according to a preferred embodiment do not extend at one level. The check valves that are shown in this example are arranged in the interior of the pin section in a manner that the individual closing balls are movable radially to the longitudinal axis of the pin section 44. According to an alternative, advantageous embodiment, three longitudinal bores parallel to one another and parallel to the longitudinal axis of the pin section are provided in the pin section, the valve balls being accommodated in said longitudinal bores in a manner that these balls are movable in the longitudinal direction of the pin section 44. Appropriate valve springs are also inserted in these longitudinal bores.

According to a preferred embodiment, the recess 36 is formed by a glass or ceramic sleeve that is injected or, for example, formed into the valve body 1. This will permit an especially smooth movement of the valve slide body 35 in an advantageous manner.

Instead of providing the above-mentioned embodiment of the valve slide element 35 as a rotary slide valve, it is also possible in accordance with an alternative embodiment, to bring this valve slide element to different switching positions by movement along its longitudinal axis. According to a preferred embodiment, a through bore is provided at the valve slide element 35, with a lock in particular the shackle of a padlock being engageable with said through bore, whereby an unauthorized removal of liquid from the vessel can be prevented. Since the valve slide element 35 also blocks the fluid communication between the discharge tubule 7 and the vessel, fluid cannot be sucked out of the vessel if the valve slide element 35 is in a blocking position.

Since the ventilation of the vessel is also blocked in the closing position of the valve slide element 35, neither gas nor vapor can escape from the vessel nor can an exchange of particles with the surroundings take place.

According to a further embodiment, the valve slide element 35 is constructed in such a manner that this element can be brought to a switching position in which the pump unit consisting of the supplying and dosing cylinder 3 and the supplying plunger 4 can also be used for sucking in the fluid from an external vessel. According to a preferred embodiment, a hose pin is formed for this purpose integrally with the valve body 1, wherein a hose leading to the external vessel can be put onto the hose pin.

Fig. 7 shows a further embodiment of the valve block with an integrally formed supplying and dosing cylinder 3. The valve block 1 in the embodiment that is shown in this connection is provided in the shape of a cylindrical pin, which is inserted into a counter section complementary formed in a manner that this pin is pivotal about its longitudinal axis. The cylindrical pin has a fluid intake duct 51 and a fluid discharge duct 50. These two ducts may be brought into a fluid communication in accordance with the pivot position of the supplying and dosing cylinder with appropriate fluid ducts in the counter-part. The pivot movement of the supplying and dosing cylinder 3 is facilitated by an operating section 52. The current switching position of the supplying and dosing cylinder 3 may be displayed, according to a preferred embodiment, by a display nose 53.

An insert cylinder is not provided in the embodiment of the valve block with an integrally formed supplying and dosing cylinder 3, that is shown in this connection, but the valve block as well as the supplying and dosing cylinder 3 are formed of a high-quality plastic material that is resistant to chemicals.

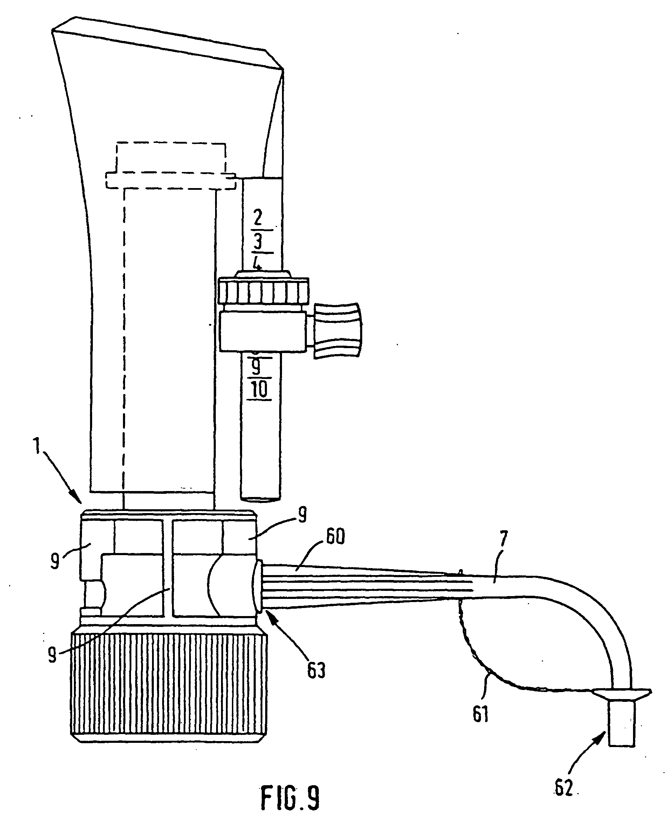

In the inventive embodiment according to Fig. 8, the valve block is integrally formed with the supplying and dosing cylinder 3. The discharge tubule 7 in the embodiment that is shown in this connection is also integrally formed with the valve body 1. A central axis of the discharge tubule 7 extends first of all in a straight line in the embodiment shown in this connection. According to a preferred embodiment, the discharge tubule is bent in the course of a subsequent shaping step. The discharge tubule 7 is formed by molding a preferably cylindrical, straight-line mold core in the interior of a preferably also cylindrical mold cavity. As an alternative, it is also possible to form the discharge tubule 7 by molding a core with a preferably cylindrical cross-section, the longitudinal axis of which in particular extending in the shape of an arc of a circle. According to a preferred embodiment, a valve seat mold section is provided at an end facing the longitudinal axis of the supplying and dosing cylinder, said end defining the inner wall of the discharge tubule, for forming a valve seat (59) in the interior of the valve block. In the embodiment according to Fig. 8, the valve block 1, as well as in the embodiment according to Fig. 1, is also provided in a skeleton structure. In this case, the valve block 1 has a number of webs 9, which reinforce the entire valve block 1. The valve block comprises a bottom recess 54 formed substantially coaxially to the hose pin 14, said bottom recess extending at least section-wise almost fully to the interior space defined in the supplying and dosing cylinder 3. On a side facing away from the discharge tubule 7, the valve block is also provided with a recess 55, which is separated from the bottom recess 54 by a comparatively thinner wall section.

In the embodiment according to Fig. 8, the valve block is screwed onto a supply block 57 by means of a swivel nut 56 which is shown just schematically in this connection, said supply block being attached to a motor-operated laboratory dosing device. The supply block is provided with an intake duct section 58 by means of which a medium to be dosed can be sucked in from a vessel means. According to a preferred embodiment, the supply block 57 is additionally provided with a duct means, through which a fluid which is first of all sucked in through the supplying and dosing cylinder means can, if needed, be supplied back into the vessel, in particular for ventilating the supplying means.

The supplying plunger, which is not shown in this connection and which is provided for being accommodated in the supplying and dosing cylinder, is coupled with a drive means and is driven alternately by the aid of an electronic control means. According to a preferred embodiment, a sealing means is provided in the supply block in order to create a secure sealing between the supply block 57 and the pin 14 originally provided as a hose pin. According to a preferred embodiment, the circumferential surface of the pin 14 is slightly conical and can be brought into sealing engagement with a conical bore formed complementarily in the supply block 57.

A special embodiment of the discharge tubule 7 is provided in the embodiment of the precision dosing device according to Fig. 9, said discharge tubule having a press-in section 63 which is pressed into the valve body 1. The press-in section 63 is provided with a number of sealing blades, which enable a secure sealing between the press-in section 63 and the valve body 1 and an especially tight seat of the discharge tubule 7 in the valve body 1. The attachment of the discharge tubule 7 at the valve body 1 by means of the press-in section 63 enables an especially position-precise attachment of the discharge tubule 7 at the valve block 1.

The discharge tubule 7 comprises a number of webs 60 by means of which the discharge tubule 7, in particular in its area facing the press-in section 63, is effectively reinforced. The webs are formed integrally with the discharge tubule 7. The discharge tubule 7 is manufactured by a plastic injection molding process.

An outlet opening of the discharge tubule 7 can be closed by means of a closing cap 62. The closing cap 62 is connected to the discharge tubule 61 through a holding strap 61. According to a preferred embodiment, the closing cap 62 and the holding strap 61 are formed integrally with the discharge tubule 7.

The web 60 of the discharge tubule 7 as well as the webs formed at the valve block 1 are arranged in a cross-like manner in the embodiment shown in this connection. Through this, an especially effective reinforcement of these members and a favorable demoulding of the discharge tubule 7 or of the valve block 1 from the respective form tool is possible.

The embodiment of the discharge tubule 7 shown in this connection may be attached for example by means of a bayonet socket means at the valve block 1, or, as shown in the embodiment of Fig. 7, it may be formed integrally with the valve block 1.

The invention is not restricted to the teaching of the embodiments described above. It is also possible for example to form an attachment means, which is provided for attaching the valve block 1 at a vessel, integrally with the valve block 1. Furthermore, it is also possible to use an especially duroplastic molding material for forming the integral unit instead of a plastic material injected in the course of a hot channel injection process.

Although it is possible to use a glass cylinder (not part of the invention) as a supplying and dosing cylinder 3, which is encompassed by a polypropylene protective tube 8 (integral with the valve block), with a glass plunger as a dosing and supplying plunger (if needed with a PTFE coating, which preferably allows the formation of at least one sealing lip) sliding in this glass cylinder, the integral dosing unit can also be formed as a ceramic cylinder (not part of the invention). However, the present invention uses a high quality plastic material for the dosing cylinder (along which the supplying plunger slides). In such a case, a stabilization of the plastic material is of advantage for a precise dosing preferably by doping (dispersion) with a particulate material stabilizing the plastic material in the plastic melt (or as a subsequent or quenching film-forming lamination) with a mineral, ceramic metal or metal oxide powder material, such as glass dust (or particles) ceramic dust (or particles), Al₂O₃ or TiO₂.

Fig. 10 shows an embodiment of the discharge tubule 101, which comprises an end section 102 for attaching the same in a press-fit at the valve block 103 of the liquid dispenser. See cross-section of such a dispenser in Fig. 16. At the side of its discharge, the discharge tubule 101 comprises a discharge section which is bent in the usual manner vertically downwards, which can also be closed by a closing cap, which is set onto the discharge tubule 101 (see Fig. 9).

The end section 102 is limited by a radial flange 106, which at the same time shows the inset length of the intake tubule 101 in the valve block 103 shown in Fig. 13.

Reinforcing ribs 107 reducing in height and starting at the radial flange 106 are formed integrally along the discharge tubule 101. These ribs reinforce the discharge tubule 101.

The end section 102 comprises a plurality of axially spaced radial ribs 104 as well as an inset end section 109, the radial dimension of which being matched with an inner diameter of an accommodation opening 110 in a valve block (see Fig. 16) in a manner that a press seat is established between the end section and the accommodation opening of the valve block 103 and the discharge tubule 1 is captively pressed into and held in the valve block 103.

The radial projections 104 at the end section 102 of the discharge tubule 101 may therefore engage respective radially inwardly projecting counter projections of the accommodation opening 110 of the valve block 103 or with different latch means, such as latch recesses or bayonet socket latch means.

The accommodation opening 110 of the valve block 103 (see Fig. 16) comprises a wedge-shaped (triangular cross-section) inwardly projecting positioning projection 111, which engages a respective counter recess 112 (extending in the axial direction) in the area of the end section 102 of the discharge tubule 101 to ensure a circumferential position of the discharge tubule 1 at the valve block 3 and to determine the inset position of the discharge tubule 1 when pressed into the accommodation opening 10 of the valve block 103.

An accommodation chamber 113 is formed in the end section 102 of the discharge tubule 101 for accommodating a valve body 114 of a pressure valve provided in the valve block 103. The valve body is a glass or ceramic ball 114, which is held in the accommodation chamber by three guide projections 108 each arranged offset about 120° and positioned with axial possibilities of movement. In Fig. 12 the valve ball 114 is shown left outside the accommodation chamber 113. The valve elucidates its insertion direction.

A section 113c of the accommodation chamber 113 reduced in diameter is provided for receiving a preloading spring 115 (in particular a metal spring), which preloads the valve ball 114 against the valve seat 123 (which is pressed in either integrally or separately) provided in the valve block 103.

In Fig. 13 the valve block 103 is shown with a discharge tubule 101 inserted therein. At the lower end the valve block 103 (freely rotatable) has an adapter sleeve 116 in an annular groove, which is provided with an internal thread and which is provided for screwing the valve block 103 onto a vessel containing a fluid to be dispensed.

According to an embodiment (which does not form part of the invention), the valve block 103 is formed integrally with a protective tube 117, as can be seen from Fig. 1b, Fig. 16 at the same time it is encompassed by a glass cylinder 122, which forms a supplying and dosing cylinder of a liquid dispenser. A glass plunger 130 or a supplying plunger which is at least partially coated and if needed provided with a sealing lip is slidably received in the supplying and dosing cylinder, connected with a manual operating means 118 (handle sleeve) for moving upwards or pressing down the supplying plunger. The entire liquid dispenser 100 (including a supplying stroke adjustment device 119) is shown in Fig. 1b. This liquid dispenser 100 can thus be composed of a minimum amount of single parts, wherein the discharge tubule 101 is pressed into the valve block 103 with a press seat and sophisticated screw connections are avoided. Such a liquid dispenser 100 is not suitable for permanent use for dispensing solvents.

The valve block 103 consists of polypropylene or a different material resistant to chemicals as well as the protective tube integrally encompassing the glass cylinder 122. The same applies for the discharge tubule 101 and the adapter 118.

The valve block 103 has a skeleton structure with enforcement ribs 120 and interposed hollow spaces 121. A suction valve body (ball) is referenced as 140 in Fig. 1b kept in the valve block 103 by a restricted sleeve 141.

Instead of a manual operation by the handle sleeve 118, a motive operation of the supplying and dosing plunger can also be provided. In connection herewith (but also in case of a manual operation), an in particular contactless path measuring means, in particular an electric or electronic, electro-optical, optical or magnetic or infrared measuring means, connected with an electronic display means may be provided.

The description above discloses a liquid dispenser having a valve block 1 connectable to a reservoir or attachable onto a vessel, comprising an intake valve 2, a supplying and dosing cylinder 3 connected to the intake valve 2, with a supplying and dosing plunger 4 being slidably accommodated in said supplying and dosing cylinder, said supplying and dosing plunger being connectable to an operating means 5, and comprising a discharge means 6 for the liquid, said discharge means being connectable to the valve block 1, wherein the valve block 1 and the supplying and dosing cylinder form an integral unit.

It is possible in a favorable manner by such a dispenser to severely reduce the manufacturing costs and assembly work of a liquid dispenser of that kind and to reliably ensure that the supplying and dosing cylinder is captively connected to the valve block in a sealing and mechanically proper manner.

According to an embodiment (not forming part of the invention), the high supply and dosing precision of the liquid dispenser is preferably ensured in that the supplying and dosing cylinder is a glass cylinder, preferably a precision quartz glass cylinder. This is an advantageous possibility of supplying sensitive or aggressive media in a reliable manner. Furthermore, a reliable sealing between the supplying plunger and the glass cylinder is ensured by the especially high surface quality of the inner wall of the glass cylinder. Moreover, a glass cylinder of that kind enables an especially easy movement of the supplying plunger. This plunger preferably is a glass plunger or a glass plunger at least partially with a PTFE coating possibly by forming one or a plurality of sealing lips. If necessary, it is also possible to make the supplying and dosing cylinder of a ceramic material (not part of the invention), in particular of a duroplastic material or of a thermoplastic material having a high melting point.

The valve block is preferably made of a plastic material resistant to chemicals, in particular of polypropylene. A valve block made of such a material is characterized by an especially high chemical durability. It is preferably set onto the vessel by means of an adapter (preferably also made of polypropylene) rotatably supported at the valve block.

The integral design of valve block and supplying cylinder is preferably realized in that the glass cylinder (not forming part of the invention) is encompassed by a plastic protective tube integrally formed with the valve block, said tube preferably consisting of plastic material resistant to chemicals, in particular polypropylene. The supply or dosing cylinder is thereby conveniently prevented from mechanical damage and glass splinters in case of glass breaking. The protective tube is formed in an advantageous manner in that this tube is connected to the outer wall of the supply cylinder in a fixedly adhering manner, i.e. that it is formed to be an inseparable composite body. In case of a damage of the glass cylinder, a release of possible splinters from the protective tube is excluded and a surprisingly inexpensive manufacture is enabled by keeping all precision and resistance criteria.

As an alternative, a ceramic cylinder (not forming part of the invention) or a plastic cylinder highly resistant to chemicals may also be used instead of the glass cylinder.

The glass cylinder (not forming part of the invention) is preferably injected into the valve block and the protective tube. That means that the intimate material compound between the glass cylinder and the encompassing protective tube (which is integral with the valve block) is achieved by injection-molding the glass cylinder in a mold.

An advantageous embodiment of the liquid dispenser if the protective tube and the valve block are formed integrally, is provided in that the valve block is formed with a skeleton structure with spaced webs separated by recesses. The liquid dispenser can be manufactured by such an embodiment of the valve block in an especially economic manner and with a high rigidity. Considerable advantages will be achieved if the valve block is manufactured by a plastic injection molding process, since then the wall thicknesses in the valve block are widely uniform. Moreover, the individual functional sections of the valve block can easily be formed in such a skeleton structure.

Preferably, the discharge means 6 has a discharge tubule which is accommodated in a press seat in the valve block 1.

Further preferably, the discharge means 6 has a discharge tubule, with a reservoir for receiving and/or positioning a valve body of a pressure valve (outlet valve) being provided in the end section thereof at the side of the valve plunger.

The valve body might be preloaded against a valve seat at the side of the valve block by a preloading means, said preloading means being accommodated in the valve chamber of the discharge tubule.

There might further be provided positioning means for a defined attachment position of the discharge tubule between the valve block 1 and the discharge tubule, said positioning means being engageable with one another.

It is preferred if a wall thickness of the protective tube 8 is at least 10% of the wall thickness of the glass cylinder 3 (not port of the invention).

Therein, the wall thickness of the protective tube 8 might be approximately 1 mm and the wall thickness of the glass cylinder 3 (not part of the invention) might be approximately 2.5 mm.

Beneficially, the protective tube 8 and/or the valve block 1 consist of a transparent or translucent plastic material.

Further beneficially, the supplying and dosing cylinder 3 is a ceramic cylinder (not part of the invention) or a cylinder of an especially high-quality plastic material which is resistant to chemicals.

Still further beneficially, the supplying or dosing cylinder 3 consists of a plastic material in which a stabilizing particulate material, in particular a mineral, ceramic metal or metal oxide powder material, such as glass particles, in particular glass dust, ceramic particles, Al₂O₃ or TiO₂ are dispersed.

Yet, it is also beneficial if the supplying and dosing cylinder 3 is provided with a scaling.

Therein, the protective tube 8 might be transparent or translucent or provided with a window at least in the area of the scaling of the supplying or dosing cylinder 3.

Preferably, the supplying or dosing cylinder 3 is connected to a contactless, in particular electric or electronic electro-optical, optical, magnetic or infrared path measuring means having an electronic display means.

Further, the protective tube 8 might integrally comprise an upper end abutment and/or a foot base at the side of the valve block.

Furthermore, a front wall section 34 of the supplying or dosing cylinder 3 might be integrally formed with the protective tube 8 within the valve block 1.

Therein, the front wall section 34 could define a through opening, which is in fluid communication with an inner chamber of the supplying or dosing cylinder 3 as well as with the intake valve 2.

Additionally, a valve body of the intake valve 2 might be captively accommodated in the through opening.

Also, the valve body might be caught in the passage opening, but could be freely movably accommodated with respect to an accompanying valve seat of the intake valve 2.

Therein, the valve body, in particular a valve ball, might be axially movable but captively accommodated in a sleeve inserted into the through opening or a wall element of the through opening.

Moreover, the through opening might be formed vertically and an outlet duct might branch off from this through opening which can be controlled by the pressure valve.

Therein, the protective tube might comprise an elongation section protruding over the supplying or dosing cylinder 3 in the axial direction, said elongation section forming a guide section for guiding the supplying and dosing plunger.

It is particularly beneficial if a hollow-cylindrical handle is connected to the supplying and dosing plunger, said handle substantially completely covering the protective tube 8 in a lower end position of the supplying or dosing cylinder 3 and having a supplying stroke adjustment means in connection with the upper end abutment.

The description above further discloses a supplying or dosing cylinder for liquids, in particular for a liquid dispenser, having an inner wall, in particular formed by a glass (not part of the invention), ceramic (not part of the invention) or plastic material for forming a supply chamber and a slide guide of a supplying or dosing plunger, wherein an outer wall of the supplying or dosing cylinder is formed by a plastic body formed during a plastic shaping process.

Thus, this provides a supplying and dosing cylinder device, in particular for a liquid dispenser which is more simple to be manufactured, and at the same time has a high and reliable dosing accuracy.

According to a preferred embodiment, the supplying and dosing cylinder formed of a glass material (not part of the invention) or of a suitable ceramic material (not part of the invention) or of a duroplastic material accommodated within the plastic body is completely encompassed in the region of its outer periphery with the plastic material of the plastic body. The injection-molding of the supplying or dosing cylinder with a plastic material forming the plastic body leads to an especially stable embodiment of the supplying and dosing cylinder. To improve the (melting) connection between the plastic body and the supplying and dosing cylinder, it is possible in an advantageous manner to chemically treat the outer surface of the supplying and dosing cylinder. It is also possible to slightly roughen the outer surface of the supplying and dosing cylinder for example by sand blasting. Instead of using a supplying and dosing cylinder made of a glass material or a ceramic material (not part of the invention), it is also possible to make the supplying and dosing cylinder of a different material, for example of a duroplastic material. When using a supplying and dosing cylinder of that kind, it turns out to be advantageous to create a bonding bridge by appropriately treating the outer surface of the supplying and dosing cylinder, whereby an especially tight bondage of the supplying and dosing cylinder at the plastic body is enabled.

According to a preferred embodiment of the invention, the plastic body is made of a transparent material. Thereby, the filling level of the supplying and dosing cylinder can be easily detected. The plastic body is made in an advantageous manner of polypropylene. The plastic body can also be made of a translucent non-transparent material.

In case the ptastic body is made of a non-transparent material, it is possible in an advantageous manner to provide window portions at least in sections, made of a transparent plastic.

An especially advantageous embodiment in order to reduce assembly work when creating the liquid dispenser is provided in that a valve block provided for receiving a valve means is integrally formed with the plastic body, i.e. with the protective tube encompassing the glass cylinder. An additional assembly of the plastic body or the supplying and dosing cylinder and the valve block is no longer necessary. Moreover, possible leakages in the area of such a joining point can be avoided in an advantageous manner. For this purpose, the valve block and the plastic body are in an advantageous manner formed as an integral unit by a plastic injection molding process. For this purpose, a preferably thermoplastic material is injected into a form tool, which forms a sleeve through which the valve block and the plastic body are integrally formed. To create an especially high-quality dispenser, the supplying and dosing cylinder in particular consisting of a glass or ceramic material (not part of the invention) or if necessary of a duroplastic material can in an advantageous manner be inserted into this sleeve before closing the injection mold. A unit is then formed by injecting the plastic material, in which the supplying or dosing cylinder is fixedly embedded.

The valve block is formed in an advantageous manner by a sleeve formed by an at least two-piece form tool, wherein the separating surface of the form tool extends substantially parallel to the longitudinal axis of the supplying and dosing cylinder. The individual wall section of the valve block can thereby be formed with a relatively thin wall, which leads to severe material savings and to a shorter curing period.

In particular, the plastic body might form the plastic cylinder and at the same time the inner and outer wall of the supplying or dosing cylinder in combination with a liquid outlet means and/or a valve block.

Preferably, the plastic body has a wall thickness, which is at least 1/10 of the wall thickness of the cylinder forming the inner wall, which is preferably of the glass cylinder (which is not part of the invention).

Beneficially, the plastic body might be formed by a plastic injection molding process.

Further preferably, the plastic body has a foot base 33 and/or a radially extended integral head section.

In conjunction with all of the above, it is beneficial if the cylinder is provided with a scaling, and that the scaling is encompassed by the plastic body.

Particularly, a scaling might be provided on the outer surface of the plastic body.

Beneficially, a front wall section 34 which is integrally formed with the plastic body is provided in a front end portion of the cylinder, wherein the front wall section 34 extends radially to the longitudinal axis of the cylinder towards the inside.

Therein, the front wall section 34 might form a through opening, which is in fluid communication with the inner space of the cylinder.

Preferably, the plastic body might form an elongation section, which extends in the axial direction of the cylinder 3 projecting over this cylinder for forming a guide section for the supplying and dosing plunger.

Further preferably, a valve block 1 provided for accommodating a valve means 2 is integrally formed with the plastic body.

Therein, the valve block 1 and the plastic body might be formed as an integral unit by a plastic injection molding process.

The description above further discloses a supplying or dosing cylinder device for supplying or dosing liquid, in particular for a liquid dispenser, comprising a supplying or dosing cylinder 3, 8 for accommodating a supplying or dosing plunger 4 reciprocal therein for limiting a supplying or dosing chamber which can be varied regarding its volume, and comprising a valve means for releasing or blocking a fluid supply path or a fluid discharge path, wherein the valve means is accommodated within a valve block integrally formed with the supplying and dosing cylinder.

Therein, the supplying or dosing cylinder 3, 8 and the valve block 1 might be formed as an integral plastic member.

Moreover, a discharge tubule 7 might be provided which is integrally formed with the valve block 1.

Additionally, the discharge tubule 7 might be pressed into the valve block 1 or injection-molded onto the valve block 1.

The discharge tubule 7 might have a plastic tube, the core of which extending in a curve form.

Therein, the plastic tube might be formed of an originally straight plastic tube, which is bent to an operational shape by resilient or plastic deformation.

The discharge tubule 7 might be provided with a bayonet socket section, and that an engagement section complementary to the valve block 1 might be provided at the valve block for attaching the discharge tubule 7 at the valve block in a removable or captive manner (press seat).

Therein, it is preferable if the discharge tubule 101 has mold elements at an upstream end section, said mold elements pointing radially outwardly, preferably a plurality of annular ribs 104 arranged in series in the axial direction, said ribs being engageable with an accommodation opening 110 extending substantially radially in the valve block 1.

The inner wall of the accommodation opening 110 of the valve block 103 might comprise counter mold elements 111 for engagement with the mold elements 112 of the end section 102 of the discharge tubule 101.

The accommodation opening 110 of the valve block 102 and an outer circumference of the end section 102 of the discharge tubule 101 might comprise latch elements 104, such as latch projections engaging latch recesses or bayonet latch elements that can be latchingly engaged with one another.

The outer end section 102 might be restricted by a radially inwardly pointing flange 106.

Therein, the discharge tubule 101 might have a discharge tube and a plurality of enforcement ribs 107 reduced in height might extend in the circumferential direction spaced apart between the flange 106 and a front downwardly bent section of the discharge tube.

Beneficially, positioning means 111, 112 are provided at the end section of the discharge tubule 101 as well as at the accommodation opening 110 of the valve block 103 engageable with one another for determining an angular position of the discharge tubule 101 at the valve block 103.

Therein, an inner wall of the accommodation opening 110 might comprise an inwardly projection positioning projection 111 of an in particular triangular cross-section extending in the axial direction of the accommodation opening.

Moreover, the end section 102 and/or the flange 106 of the discharge tubule 101 might have a positioning groove 112 for engagement with the positioning projection 111 of the accommodation opening 110 of the valve block 103.

Preferably, there is provided an extended accommodation chamber 113 for accommodating a valve body 114 of the pressure valve of the valve block 103 within the end section 102.

Therein, the accommodation chamber 113 preferably has a section 113a of a reduced diameter for accommodating a preloading means 115 for the valve body 114.

Also, an inner wall of the accommodation chamber 113 might comprise guide projections 108 for positioning the valve body 114.

Therein, the guide projections 108 might be provided in a circumferential spacing of 120° and the valve body is preferably a glass or ceramic ball 114.

It is beneficial if the valve block 1 comprises at least one valve seat, which if formed in the valve block 1 in the course of a plastic injection molding process.

It is further beneficial if at least one of the valve seats is made of a glass or plastic material or of a material different to the material of the valve block, and that the valve block comprises a valve seat accommodation section for accommodating a valve seat element.

Preferably, the valve seat element is pressed into the valve block 1.

Further preferably, at least one recess 54 is provided in the valve block 1 on the side facing away from the supplying or dosing cylinder 3, 8, said recess extending in the direction towards the supplying or dosing cylinder 3, 8, wherein the wall thickness of a wall separating this recess from the supplying or dosing cylinder 3, 8 is thinner than the axial depth of the recess 54.

Therein, the recess 54 might form a bottom recess and encompasses a hose pin 14 at least section-wise.

Also, the wall thickness of the first wall preferably is less than 6 mm.

It is preferred if the valve body 1 comprises a second recess 55 extending substantially radially inwardly towards the longitudinal axis of the supplying or dosing cylinder, and the bottom portion of which being defined by a second wall, the wall thickness of which being thinner than the depth of the second recess 55 measured radially to the said longitudinal axis.

Beneficially, at least a section of the second wall separates the second recess 55 from the bottom recess 54.

Further beneficially, at least a section of the second wall separates the second recess 55 from the interior of the supplying or dosing cylinder 3, 8.

According to a preferred embodiment, the valve body 1 might have a number of reinforcement ribs 9.

According to a further preferred embodiment, a drive means is provided for moving the supplying or dosing plunger 4 relative to the supplying or dosing cylinder 3, 8.

The description above further discloses a device for dispensing liquids, comprising a supplying unit which contains a manually or motorically operable plunger, a valve block 3 with an intake valve and a pressure valve and a discharge tubule 1 inserted in a press-seat into the valve block 3, wherein an end section 2 of the discharge tubule 1 accommodates a valve body 14 of the pressure valve and retains it against a valve seat 23 in the valve block 3 and the valve block 3 is integrally formed with a protective tube 17 accommodating a glass cylinder 22 (not part of the invention) as a supplying or dosing cylinder, said protective tube encompassing the supplying or dosing cylinder of the supplying unit.

The description above still further discloses a method of manufacturing a liquid dispenser, comprising a supplying or dosing cylinder, wherein the valve block is injection-molded from a plastic material in the interior of a mold cavity and wherein at the same time a supplying or dosing cylinder device for accommodating a dosing or supplying cylinder by forming a plastic body integrally formed with the valve block 1 is manufactured.

This provides a method of manufacturing a liquid dispenser or of manufacturing a supplying/dosing cylinder valve block unit for a liquid dispenser, which can be easily manufactured at a constantly high utility value, in particular in view of a high dosing precision over long periods of time.

Namely, a method is provided for manufacturing a liquid dispenser comprising a supplying and dosing cylinder and a valve block in which in the course of a plastic injection molding process the valve block is formed in the interior of a sleeve of a plastic material, and which is removed from the sleeve after curing of the plastic material. This method is characterized in that in the course of the plastic injection molding process forming the valve block, a plastic body is integrally formed with the valve block for receiving a supplying cylinder.

It is thereby possible in an advantageous manner to provide a cylinder/valve block unit by means of which the total assembly work is severely reduced when manufacturing a liquid dispenser.

According to a preferred embodiment of the method, an inset cylinder inserted into a form tool forming the supplying and dosing cylinder is coated by a plastic material forming a plastic body. The cylinder made for example of a glass material (not part of the invention) is centered in an advantageous manner by a forming core. To avoid excessive thermal loads of the cylinder when contacting the hot plastic injected into the sleeve, the cylinder is pre-heated in an advantageous manner before contacting the plastic material. According to a preferred embodiment of the method, the cylinder is set onto the forming core with a tight fit. It is thereby avoided in an advantageous manner that the plastic material provided for forming the plastic body penetrates a gap portion formed between the glass cylinder and the forming core.

The front end of the cylinder is coated in an advantageous manner by the plastic material. The edges formed in the end portions of the cylinder are thereby covered in an inexpensive way, so that there is no risk of getting hurt. Moreover, it is possible to provide small conical extension in this end portion, which facilitates inserting a supplying and dosing plunger into the cylinder.

The front end of the cylinder is coated in an advantageous manner by the plastic material. The edges formed in the end portions of the cylinder are thereby covered in an inexpensive way, so that there is no risk of getting hurt. Moreover, it is possible to provide small conical extension in this end portion, which facilitates inserting a supplying and dosing plunger into the cylinder.

An especially advantageous embodiment of the method is provided in that the plastic material is injected into the sleeve at different locations. This on the one hand leads in a favorable manner to an especially favorable flowing direction of the plastic material in the region of the supplying and dosing cylinder. On the other hand, the majority of the plastic material can be filled into the sleeve in a manner that this plastic material does not contact the supplying and dosing cylinder.

Different plastic materials can, in an advantageous manner, be injected into the sleeve at different locations. According to a preferred embodiment of the method, a transparent or translucent plastic material, preferably polypropylene, is injected into the area of the sleeve provided for receiving the supplying and dosing cylinder, and a dyed plastic material is injected into the sleeve provided for forming the valve block. It is also possible to inject an opaque plastic material into the supplying and dosing cylinder and into the sleeve provided for forming the valve block, said opaque plastic material having desired mechanical properties. The chronological course of the injection process of the respective plastic material is in an advantageous manner defined by a time table, so that it is for example ensured that the supplying and dosing cylinder is exclusively encompassed by a transparent plastic material.

In particular, a glass cylinder (not forming part of the invention), forming said supplying or dosing cylinder 3 which is introduced into the mold cavity when forming the plastic body might be coated by a plastic material forming the plastic body.

Therein, the glass cylinder (not forming part of the invention) might be centered by a mold core 28.

Preferably, the glass cylinder (not forming part of the invention) is pre-heated before contacting the plastic material.

Further preferably, the glass cylinder (not forming part of the invention) is put onto the mold core with a tight fit.

Additionally, the glass cylinder (not forming part of the invention) might be coated by the plastic material in its front end portion.

Particularly, the plastic material could be injected into the mold cavity 27 at different locations.

Moreover, different kinds of plastic material might be injected into the mold cavity 27 at different locations.

Also, a transparent or translucent plastic material might be injected into the mold cavity 27 provided for accommodating the glass cylinder (not forming part of the invention).

Beneficially, a dyed plastic material is injected into the mold cavity that is provided for forming the valve block.

Further beneficially, the injection of the plastic materials is carried out in a time-controlled manner.

Still further beneficially, the mold cavity 27 is brought into an open position by opening in a direction transversely to the longitudinal direction of the glass cylinder (not part of the invention).

Yet, it is further beneficial if the supplying cylinder valve block unit is formed in a mold cavity 27, which is restricted by two mold halves 25, 26 defining an outer portion of the valve block and by two core elements 28, 29.

Preferably, the two core elements 28, 29 are inserted into the mold cavity 27 defined by the mold halves.

Further, the glass cylinder (not forming part of the invention) is attached onto the appropriate core element 28 before closing the mold cavity 27.

## Claims

1. Supplying and dosing cylinder unit for precisely supplying and dosing an adjustable amount of liquid, in particular for a liquid dispenser, comprising:
a supplying and dosing cylinder (3) with a supplying plunger (4) being slidably accommodated therein, limiting a supplying and dosing chamber which can be varied according to its volume, and
a valve block (1), said valve block (1) comprising a valve means (2, 6) for releasing or blocking a fluid supply path (13) or a fluid discharge path (7), **characterized in that**
the valve block (1) is formed as an integral plastic member with a plastic body forming an inner wall and an outer wall of the supplying and dosing cylinder (3) formed during a plastic shaping process of a high-quality plastic material resistant to chemicals.

2. Supplying and dosing cylinder unit according to claim 1, **characterized by** a supplying and dosing plunger (4), said supplying and dosing plunger (4) being slidably accommodated in the supplying and dosing cylinder (3) and limiting a supplying and dosing chamber which can be varied regarding its volume by an adjustment of a stroke of the supplying and dosing plunger (4).

3. Supplying and dosing cylinder unit according to claim 1 or 2, **characterized in that** the valve means is accommodated within the valve block (1).

4. Supplying and dosing cylinder unit, in particular according to at least one of the preceding claims 1 to 3 **characterized in that** the valve block (1) is provided in a skeleton structure, wherein the valve block (1) comprises a number of reinforcement ribs (9).

5. Supplying and dosing cylinder unit according to at least one of the preceding claims 1 to 4, **characterized by** a discharge means, in particular a discharge tubule (7), said discharge means (7) being integrally formed with the valve block (1).

6. Supplying and dosing cylinder unit according to claim 5, **characterized in that** the discharge tubule (7) is injection molded onto the valve block (1).

7. Supplying and dosing cylinder unit according to at least one of the preceding claims 1 to 5, **characterized by** a discharge means, in particular a discharge tubule (7), said discharge means (7) being press-fitted into the valve block (1).

8. Supplying and dosing cylinder unit according to at least one of the preceding claims 1 to 7, **characterized in that** the supplying and dosing plunger (4) is manually or motorically operable.

9. Supplying and dosing cylinder unit according to claim 8, **characterized by** a drive means adapted to move the supplying and dosing plunger (4) relative to the supplying and dosing cylinder (3).

10. Supplying and dosing cylinder unit according to at least one of the preceding claims 1 to 9, **characterized in that** the valve block (1) is attachable to a vessel, a container or a supply block (57) by means of a fastening means engaging with a circumferential groove (30) provided in a lower portion of the valve block (1).

11. Supplying and dosing cylinder unit according to claim 10, **characterized by** a swivel nut (21,103,56) representing the fastening means.

12. Supplying and dosing cylinder unit according to claim 10 or 11, **characterized by** an annular flange (31), said annular flange (31) defining the circumferential groove (30), wherein said annular flange (31 ) is resiliently provided at the valve block (1) in a radial direction thereof by means of an annular groove (32) formed in the valve block (1).

13. Supplying and dosing cylinder unit, in particular according to at least one of the preceding claims 1 to 12, **characterized in that** the valve block (1) comprises at least one valve seat, which is formed in the valve block (1) in the course of a plastic injection molding process.

14. Supplying and dosing cylinder unit according to claim 13, **characterized in that** the at least one valve seat is made of a glass or plastic material or of a material different to the material of the valve block (1), and that the valve block (1) comprises a valve seat accommodation section for accommodating a valve seat element.

15. Supplying and dosing cylinder unit according to claim 13 or 14, **characterized in that** the valve seat element is pressed into the valve block (1).

16. Supplying and dosing cylinder unit according to at least one of the preceding claims 13 to 15, **characterized in that** at least one recess (54) is provided in the valve block (1) on the side facing away from the supplying or dosing cylinder (3,8), said recess (54) extending in the direction towards the supplying or dosing cylinder (3,8), wherein a wall thickness of a wall separating this recess (54) from the supplying or dosing cylinder (3,8) is thinner than an axial depth of the recess (54).

17. Supplying and dosing cylinder unit according to claim 16, **characterized in that** the recess (54) forms a bottom recess and encompasses a hose pin (14) at least section-wise.

18. Supplying and dosing cylinder unit according to at least one of the preceding claims 13 to 17, **characterized in that** the valve block (1) comprises a second recess (55) extending substantially radially inwardly towards the longitudinal axis of the supplying and dosing cylinder (3,8), wherein a bottom portion of the second recess is defined by a second wall, a wall thickness of which being thinner than a depth of the second recess (55) measured radially to the said longitudinal axis.

19. Liquid dispenser adapted to supply and to dose an adjustable amount of liquid **characterized by** comprising a supplying and dosing cylinder unit according to at least one of the preceding claims 1 to 18.

## Patentansprüche

1. Förder- und Dosierzylindereinheit zum präzisen Fördern und Dosieren einer einstellbaren Menge einer Flüssigkeit, insbesondere für einen Flüssigkeitsdispenser, mit:
einem Förder- und Dosierzylinder (3) mit einem Förderkolben (4), der gleitbeweglich darin aufgenommen ist, und eine Förder- und Dosierkammer begrenzt, die bezüglich ihres Volumens veränderbar ist, und
einem Ventilblock (1), wobei der Ventilblock (1) eine Ventileinheit (2, 6) zum Freigeben oder Versperren einer Flüssigkeitszufuhrleitung (13) oder einer Flüssigkeitsabgabeleitung (7) aufweist, **dadurch gekennzeichnet,**
**daß** der Ventilblock (1) als ein integrales Kunststoffteil mit einem Kunststoffkörper ausgebildet ist, der eine innere Wandung und eine äußere Wandung des Förder- und Dosierzylinders (3) bildet, und während eines Kunststoffformprozesses aus einem hochqualitativen Kunststoffmaterial, das widerstandsfähig gegenüber Chemikalien ist, ausgebildet ist.

2. Förder- und Dosierzylindereinheit gemäß Anspruch 1, **gekennzeichnet durch** einen Förder- und Dosierkolben (4), wobei der Förder- und Dosierkolben (4) gleitbar in dem Förder- und Dosierzylinder (3) aufgenommen ist und einen Förder- und Dosierraum begrenzt, der mittels einer Anpassung eines Hubweges des Förder- und Dosierkolbens (4) bezüglich seines Volumens veränderbar ist.

3. Förder- und Dosierzylindereinheit gemäß Anspruch 1 oder 2, **dadurch gekennzeichnet, daß** die Ventileinrichtung im Ventilblock (1) aufgenommen ist.

4. Förder- und Dosierzylindereinheit, insbesondere gemäß zumindest einem der voranstehen Ansprüche 1 bis 3, **dadurch gekennzeichnet, daß** der Ventilblock (1) mit einer Gerüststruktur ausgebildet ist, wobei der Ventilblock (1) eine Anzahl von Versteifungsrippen (9) aufweist.

5. Förder- und Dosierzylindereinheit gemäß zumindest einem der voranstehen Ansprüche 1 bis 4, **gekennzeichnet durch** eine Ausgabeeinrichtung, insbesondere eine Ausgabekanüle (7), wobei die Ausgabeeinrichtung (7) integral mit dem Ventilblock (1) ausgebildet ist.

6. Förder- und Dosierzylindereinheit gemäß Anspruch 5, **dadurch gekennzeichnet, daß** die Ausgabekanüle an den Ventilblock (1) mittels Spritzgießen angeformt ist.

7. Förder- und Dosierzylindereinheit gemäß zumindest einem der voranstehen Ansprüche 1 bis 5, **gekennzeichnet durch** eine Ausgabeeinrichtung, insbesondere eine Ausgabekanüle (7), wobei die Ausgabeeinrichtung (7) mit dem Ventilblock (1) über eine Pressverbindung verbunden ist.

8. Förder- und Dosierzylindereinheit gemäß zumindest einem der vorstehenden Ansprüche 1 bis 7, **dadurch gekennzeichnet, daß** der Förder- und Dosierkolben (4) manuell oder motorisch betätigbar ist.

9. Förder- und Dosierzylindereinheit gemäß Anspruch 8, **gekennzeichnet durch** eine Antriebseinrichtung, die dazu vorgesehen ist, den Förder- und Dosierkolben (4) relativ zum Förder- und Dosierzylinder (3) zu bewegen.

10. Förder- und Dosierzylindereinheit gemäß zumindest einem der vorstehenden Ansprüche 1 bis 9, **dadurch gekennzeichnet, daß** der Ventilblock (1) an einem Gefäß, einem Behälter oder einem Versorgungsblock (57) mittels eines Befestigungsmittels anbringbar ist, wobei das Befestigungsmittel mit einer umlaufenden Nut (30) im Eingriff ist, die in einem unteren Bereich des Ventilblocks (1) vorgesehen ist.

11. Förder- und Dosierzylindereinheit gemäß Anspruch 10, **gekennzeichnet durch** eine Überwurfmutter (21, 103, 56), welche das Befestigungsmittel darstellt.

12. Förder- und Dosierzylindereinheit gemäß Anspruch 10 oder 11, **gekennzeichnet durch** einen ringförmigen Flansch (31), wobei der ringförmige Flansch (31) die umlaufende Nut (30) festgelegt, und wobei der ringförmige Flansch (31) am Ventilblock (1) elastisch angeordnet ist, mittels einer ringförmigen Nut (32), die im Ventilblock (1) ausgebildet ist.

13. Förder- und Dosierzylindereinheit, insbesondere gemäß zumindest einem der vorstehenden Ansprüche 1 bis 12, **dadurch gekennzeichnet, daß** der Ventilblock (1) zumindest einen Ventilsitz aufweist, der im Ventilblock (1) im Laufe eines Plastikspritzgießvorganges ausgebildet ist.

14. Förder- und Dosierzylindereinheit gemäß Anspruch 13, **dadurch gekennzeichnet, daß** der zumindest eine Ventilsitz aus einem Glas- oder Plastikwerkstoff oder aus einem zum Werkstoff des Ventilblocks (1) unterschiedlichen Werkstoff hergestellt ist, und daß der Ventilblock (1) einen Ventilsitzaufnahmebereich zum Aufnehmen eines Ventilsitzbauelementes aufweist.

15. Förder- und Dosierzylindereinheit gemäß Anspruch 13 oder 14, **dadurch gekennzeichnet, daß** das Ventitsitzbauelement in den Ventilblock (1) eingepreßt ist.

16. Förder- und Dosierzylindereinheit gemäß zumindest einem der vorstehenden Ansprüche 13 bis 15, **dadurch gekennzeichnet, daß** zumindest eine Aussparung (54) im Ventilblock (1) auf der vom Förder- und Dosierzylinder (3, 8) abgewandten Seite vorgesehen ist, wobei sich die Aussparung (54) in Richtung auf den Förder- und Dosierzylinder (3, 8) hin erstreckt, und wobei eine Wandstärke einer Wand, die diese Aussparung (54) vom Förder- und Dosierzylinder (3, 8) trennt, dünner ist als eine axiale Tiefe der Aussparung (54).

17. Förder- und Dosierzylindereinheit gemäß Anspruch 16, **dadurch gekennzeichnet, daß** die Aussparung (54) eine Bodenaussparung bildet und einen Schlauchnippel (14) zumindest abschnittsweise umgibt.

18. Förder- und Dosierzylindereinheit gemäß zumindest einem der vorstehenden Ansprüche 13 bis 17, **dadurch gekennzeichnet, daß** der Ventilblock (1) eine zweite Aussparung (55) aufweist, die sich im wesentlichen radial nach innen in Richtung auf eine Längsachse des Förder- und Dosierzylinders (3, 8) hin erstreckt, und wobei ein Bodenbereich der zweiten Aussparung (55) durch eine zweite Wand definiert ist, deren Wandstärke dünner ist als die Tiefe der zweiten Aussparung (55) in einer radialen Richtung zur Längserstreckung gemessen.

19. Flüssigkeitsdispenser zum Fördern und zum Dosieren einer einstellbaren Flüssigkeitsmenge, **dadurch gekennzeichnet, daß** er eine Förder- und Dosierzylindereinheit gemäß zumindest einem der vorstehenden Ansprüche 1 bis 18 aufweist.

## Revendications

1. Unité à cylindre d'alimentation et de dosage pour fournir et doser de façon précise une quantité ajustable de liquide, en particulier pour un distributeur de liquide, comprenant :
Un cylindre d'alimentation et de dosage (3) avec un piston d'alimentation (4) qui y est logé en coulissant, limitant une chambre d'alimentation et de dosage qui peut être variée en volume, et
un bloc de soupape (1), ledit bloc de soupape (1) comprenant un moyen à soupapes (2,6) pour libérer ou bloquer une voie d'alimentation en fluide (13) ou une voie d'évacuation de fluide (7), **caractérisée en ce que**
le bloc de soupape (1) est formé comme un élément unitaire en plastique avec un corps en plastique formant une cloison intérieure et une cloison extérieure du cylindre d'alimentation et de dosage (3), formé au cours d'un procédé de mise en forme plastique d'une matière plastique de haute qualité résistant aux produits chimiques.

2. Unité à cylindre d'alimentation et de dosage selon la revendication 1, **caractérisée par** un piston d'alimentation et de dosage (4), ledit piston d'alimentation de dosage (4) étant logé en coulissant dans le cylindre d'alimentation et dosage (3) et délimitant une chambre d'alimentation et de dosage qui peut être variée en volume par un ajustement d'une course du piston d'alimentation et de dosage (4).

3. Unité à cylindre d'alimentation de dosage selon la revendication 1 et 2, **caractérisée en ce que** le moyen à soupape est logé dans le bloc de soupape (1).

4. Unité à cylindre d'alimentation et de dosage, en particulier selon au moins l'une des revendications précédentes 1 à 3, **caractérisée en ce que** le bloc de soupape (1) est disposé dans une structure en squelette, le bloc de soupape (1) comprenant des nervures de renforcement (9).

5. Unité à cylindre d'alimentation et de dosage selon au moins l'une des revendications précédentes 1 à 4, **caractérisée par** un moyen d'évacuation, en particulier un tube d'évacuation (7), d'autres moyens d'évacuation (7) étant formés unitaires avec le bloc de soupape (1).

6. Unité à cylindre d'alimentation et de dosage selon la revendication 5, **caractérisée en ce que** le tube d'évacuation (7) est moulé par injection sur le bloc de soupape (1).

7. Unité à cylindre d'alimentation et de dosage selon au moins l'une des revendications précédentes 1 à 5, **caractérisée par** un moyen d'évacuation, en particulier un tube d'évacuation (7), ledit moyen d'évacuation (7) étant inséré à la presse dans le bloc de soupape (1).

8. Unité à cylindre d'alimentation et de dosage selon au moins l'une des revendications précédentes 1 à 7, **caractérisée en ce que** le piston d'alimentation et de dosage (4) est mobile manuellement ou par moteur.

9. Unité à cylindre d'alimentation et de dosage selon la revendication 8, **caractérisée par** un moyen d'entraînement adapté à déplacer le piston d'alimentation et de dosage (4) par rapport au cylindre d'alimentation et de dosage (3).

10. Unité à cylindre d'alimentation et de dosage selon l'une des revendications précédentes 1 à 9, **caractérisée en ce que** le bloc de soupape (1) peut être attaché à une enveloppe, un récipient ou un bloc d'alimentation (57) au moyen d'un moyen d'attache s'engageant dans une gorge circulaire (30) établie dans une portion inférieure du bloc de soupape (1).

11. Unité à cylindre d'alimentation et de dosage selon la revendication 10, **caractérisée par** un écrou pivotant (21, 103, 56) représentant le moyen d'attache.

12. Unité à cylindre d'alimentation et de dosage selon la revendication 10 ou 11, **caractérisée par** un rebord annulaire (31), le rebord annulaire (31) délimitant la gorge circulaire (30), dans laquelle le rebord annulaire (31) est établi de façon élastique au bloc de soupape (1) en direction radiale de celui-ci au moyen d'une gorge annulaire (32) formée dans le bloc de soupape (1).

13. Unité à cylindre d'alimentation et de dosage, en particulier selon au moins l'une des revendications précédentes 1 à 12, **caractérisée en ce que** le bloc de soupape (1) comprend au moins un siège de soupape, formé dans le bloc de soupape (1) au cours d'un procédé de moulage par injection plastique.

14. Unité à cylindre d'alimentation et de dosage selon la revendication 13, **caractérisée en ce que** ledit au moins un siège de soupape est formé d'un matériau en verre ou en plastique ou d'un matériau différent du matériau du bloc de soupape (1), et **en ce que** le bloc de soupape (1) comprend une section de logement de siège de soupape pour loger un élément de siège de soupape.

15. Unité à cylindre d'alimentation et de dosage selon la revendication 13 et 14, **caractérisée en ce que** l'élément de siège de soupape est pressé dans le bloc de soupape (1).

16. Unité à cylindre d'alimentation et de dosage selon au moins une des revendications précédentes 13 à 15, **caractérisée en ce qu'**au moins un renfoncement (54) est établi dans le bloc de soupape (1) sur le côté dirigé à l'opposé du cylindre d'alimentation ou de dosage (3, 8), le renfoncement (54) s'étendant dans une direction vers le cylindre d'alimentation ou de dosage (3,8), dans laquelle une épaisseur de paroi d'une paroi séparant ce renfoncement (54) du cylindre d'alimentation ou de dosage (3,8) est plus mince qu'une profondeur axiale du renfoncement (54).

17. Unité à cylindre d'alimentation et de dosage selon 16, **caractérisée en ce que** le renfoncement (54) forme un renfoncement de fond et entoure une broche de tuyau souple (14) au moins sur une section.

18. Unité à cylindre d'alimentation et de dosage selon au moins l'une des revendications précédentes 13 à 17, **caractérisée en ce que** le bloc de soupape (1) comprend un deuxième renfoncement (55) s'étendant substantiellement radialement vers l'intérieur vers l'axe longitudinal du cylindre d'alimentation et de dosage (3,8), dans laquelle une portion de fond du deuxième renfoncement est délimitée par une deuxième paroi, dont une épaisseur de paroi est plus fine qu'une profondeur du deuxième renfoncement (55) mesurée radialement jusqu'au dit axe longitudinal.

19. Distributeur de liquide adapté à fournir et doser une quantité ajustable de liquide, **caractérisé en ce qu'**il comprend une unité à cylindre d'alimentation et de dosage selon au moins l'une des revendications précédentes 1 à 18.
